# EUROPÄISCHE PATENTSCHRIFT

(11) **EP 4 280 017 B1**
(45) Veröffentlichungstag und Bekanntmachung des Hinweises auf die Patenterteilung: **19.11.2025**
(21) Anmeldenummer: 23173618.2
(22) Anmeldetag: 16.05.2023
(51) Int. Cl.: G05D 21/02, G01B 9/02

(54) **VERFAHREN UND VORRICHTUNG ZUR AKTIVEN STABILISIERUNG DER GASBRECHZAHL, RESPEKTIVE DER GASDICHTE, IN EINER ABGESCHLOSSENEN MESSKAMMER**
METHOD AND DEVICE FOR ACTIVELY STABILIZING THE GAS REFRACTIVE INDEX, OR RESPECTIVELY THE GAS TIGHT, IN A SEALED MEASURING CHAMBER
PROCÉDÉ ET DISPOSITIF POUR LA STABILISATION ACTIVE DU COEFFICIENT DE RUPTURE DE GAZ, LA CORRECTION DE L'ÉTANCHÉITÉ AUX GAZ DANS UNE CHAMBRE DE MESURE FERMÉE

(30) Priorität: 18.05.2022 DE 102022112470
(43) Veröffentlichungstag der Anmeldung: 22.11.2023
(73) Patentinhaber: SIOS Meßtechnik GmbH, 98693 Ilmenau (DE)
(72) Erfinder: MANSKE, Eberhard, 98693 Ilmenau (DE); ORTLEPP, Ingo, 98544 Zella-Mehlis (DE); HOFFMANN, Maximilian, 36433 Bad Salzungen (DE); MASTYLO, Rastyslav, 98693 Ilmenau (DE); FRÖHLICH, Thomas, 98693 Ilmenau (DE); KISSINGER, Thomas, 98693 Ilmenau (DE)
(74) Vertreter: Liedtke & Partner Patentanwälte

(56) Entgegenhaltungen:
- US-A- 5 764 362

## Beschreibung

Die Erfindung betrifft ein Verfahren und eine Vorrichtung zur aktiven Stabilisierung der Gasbrechzahl, respektive der Gasdichte, insbesondere der Luftbrechzahl, respektive der Dichte der Luft, für Präzisionsmessanordnungen durch eine aktive Druck- bzw. Volumenregelung einer, die Messanordnung umgebenden gas-, insbesondere luftdicht abgeschlossenen Kammer, vorzugsweise, aber nicht notwendigerweise, nahe des Umgebungsluftdruckes. Sie bezieht sich auf Längen- bzw. Abstandsmessanordnungen, bei denen eine Brechzahländerung zu einer Änderung einer optischen Weglänge führt, die wiederum zu einer Messabweichung der geometrischen Messlänge führen würde. Sie bezieht sich insbesondere auf interferometrische Längen- bzw. Abstandmessungen, aber auch auf konfokale Mikroskope, konfokale Sensoren, Laserfokussensoren, Depth-of-fokus-Verfahren und andere optische Messverfahren. Die Erfindung bezieht sich auch auf gravimetrische Präzisionsmessungen, bei denen aufgrund der Regelung auf eine konstante Gasdichte ein konstanter Auftrieb der Kraftmess- bzw. Wägevorrichtung gewährleistet werden kann.

Mit als respektive bezeichneten Merkmalen sind in dieser Patentanmeldung optional zusätzliche oder alternative Merkmale zu verstehen; respektive ist also als und/oder zu verstehen.

Es ist bekannt, Abstandsmessungen bzw. Messungen von Längenänderungen physikalischer Längen mit Hilfe eines Interferometers durchzuführen. Bei einer derartigen Messung wird die optische Weglänge gemessen, die sich aus der physikalischen Weglänge und der integralen Brechzahl des Mediums auf der gemessenen Weglänge zusammensetzt. Der Einfluss der Brechzahl des Mediums, in dem die Messung erfolgt, auf die Längen- bzw. Abstandsmessung kann dadurch eliminiert werden, dass die Brechzahl des Mediums mittels Refraktometer oder mittels Zweiwellenlängenverfahren oder anderen Brechzahlmessgeräten gemessen und anschließend der Längenmesswert rechnerisch korrigiert wird. Allerdings sind diese Verfahren im Allgemeinen sehr aufwändig.

Es ist ferner bekannt, die Brechzahl des Mediums, in dem die Messung erfolgt, durch die Messung verschiedener Umgebungsparameter, insbesondere Lufttemperatur, Luftdruck und Luftfeuchte mittels empirischer Brechzahlformeln zu bestimmen, um den interferometrischen Längenmesswert wiederum rechnerisch zu korrigieren und so den Brechzahleinfluss zu kompensieren. Ein Überblick über diese Verfahren ist in [1] zu finden. Jedoch können mit üblichen Umweltsensoren bestenfalls relative Längenmessunsicherheiten von 10⁻⁷ bis 5·10⁻⁸ erzielt werden. Einerseits durch die punktförmigen Temperaturmessungen, insbesondere aber auch durch die unzureichende Kenntnis der Lufttotstrecken der Interferometer entstehen zum Teil große Messunsicherheiten.

Optische Abstands- bzw. Längenmessverfahren, wie z. B. konfokale Mikroskope, konfokale Sensoren, Laserfokussensoren, Depth-of-fokus-Verfahren erzeugen ein Sensorsignal, wenn sich die zu messende Oberfläche an einem wohldefinierten Ort des optischen Strahlenganges, insbesondere genau im Brennpunkt eines optischen Systems (Objektivs) befindet. Ändert sich die Brechzahl der Luft, so ändert sich auch die Lage dieses Bezugspunktes und es kommt unweigerlich zu Messabweichungen. Wetterbedingt oder in Messräumen durch Schleusenbedienungen kann es durchaus zu schnellen Druckschwankungen von mehr als 5 hPa kommen, was in einem konfokalen System zu Abstandsfehlern von 100 nm und mehr führen kann.

Bei Langzeitmessungen, die in der Präzisionsmesstechnik immer häufiger angewendet werden, ist von Druckluftschwankungen bis 120 hPa mit Messabweichungen von mehreren Mikrometern auszugehen. Diesem Umstand wurde in der praktischen Messtechnik bisher keine Rechnung getragen. Vielmehr wird versucht, durch kurze Messzeiten diese Messabweichungen gering zu halten.

Konfokale Messanordnungen mit einer Brechzahlkorrektur sind nach dem Stand der Technik nicht bekannt. Darüber hinaus wäre selbst eine Brechzahlkompensation mittels Edlén-Formel (s. hierzu auch [3]) mit großer Unsicherheit behaftet, da die Bezugslänge im optischen System nicht bekannt ist.

Ebenso kann die Luftdichte als störender und zu berücksichtigender Korrekturparameter bei Präzisionswägungen durch die Messung verschiedener Umgebungsparameter, insbesondere Lufttemperatur, Luftdruck und Luftfeuchte, rechnerisch ermittelt werden.

Verfahren und Rechenvorschriften sind aus [6] sowie aus [7] bekannt. Wägungen in speziellen Vakuumkammern unter Hochvakuumbedingungen sind für hochgenaue Präzisionswägungen bekannt [8]. Die Messung in diesen speziellen Vakuumkammern ist jedoch mit hohem technischen Aufwand verbunden.

Es ist weiter bekannt, dass für interferometrische Präzisionsmessungen möglichst die gesamte Interferometeranordnung im Vakuum betrieben wird, um so Änderungen der Brechzahl während der Messung zu minimieren. Zur Realisierung solcher Anordnungen kommen häufig Balganordnungen zum Einsatz, um das Vakuum der Interferometerstrecke von der zu messenden Strecke, beispielsweise eines Längenkomparators, abzudichten [2].

Zur Reduzierung der Anzahl der notwendigen gasdichten Durchführungen wird in [5] ein anderer Ansatz beschrieben, bei dem sich die gesamte Messanordnung, inklusive Interferometeranordnung und Messobjekt, in einer Vakuumkammer befindet. Dieser Ansatz hat jedoch zur Folge, dass das Messobjekt großen Druckunterschieden ausgesetzt wird, welche als mechanische Belastungen eine Verformung nach sich ziehen. Außerdem ist eine Messung in einer Vakuumkammer sowohl durch den komplexen technischen Aufbau der Kammer, als auch bei den Anforderungen an das Ausbildungsniveau der Bediener sehr aufwändig. Zudem führt jeder Austausch des Messobjekts durch lange Evakuierungszeiten und anschließende Wartezeiten zu einem Temperaturausgleich und einem sehr langwierigen Messprozess. Schließlich sind auch nicht alle Messobjekte, beispielsweise biologische Proben, vakuumtauglich.

Technisch wird bei einem Vakuumbetrieb kein ideales Vakuum mit einem absoluten Druck von 0 Pa erreicht. Dichte und Brechzahl innerhalb der Messkammer unterliegen durch die verbleibenden Gasmoleküle daher weiterhin einer Temperaturabhängigkeit. Dennoch ist es nach dem Stand der Technik lediglich üblich, den Kammerdruck auf einen konstanten Wert zu regeln oder auch nach Erreichen des Pumpenenddruckes weiterhin zu pumpen. Durch Temperaturdriften während des Betriebes kommt es also weiterhin zu Dichte- respektive Brechzahlvariationen. Eine Regelung auf eine konstante Dichte, respektive Brechzahl, findet nach dem Stand der Technik daher nicht statt. Auch beim hermetischen Verschließen der Messkammer bei nahezu Normaldruck wirken sich äußere Druck- und Temperaturänderungen weiterhin nachteilig im Inneren aus.

US 5,764,362 A beschreibt ein Verfahren und eine Vorrichtung zum Messen von Schwankungen des Brechungsindex eines Gases, beispielsweise Luft, in einem Messpfad. Das Verfahren und die Vorrichtung können verwendet werden, um die Verschiebung eines Objekts unabhängig von diesen Schwankungen zu messen. Ein kohärentes Quelllicht liefert entlang des Messpfads zwei Quelllichtstrahlen mit Quellwellenlängen, die im Wesentlichen harmonisch zueinander in Beziehung stehen. Die Strahlen durchlaufen den Messpfad mehrfach, wobei die Anzahl der Durchgänge der jeweiligen Lichtstrahlen in harmonischem Verhältnis steht und das Verhältnis der Harmonischen im Wesentlichen das gleiche ist wie das im Wesentlichen harmonische Verhältnis zwischen den Wellenlängen, um heterodyne Phasenverschiebungen auf der Grundlage der bereitgestellten Quellwellenlängen und der Anzahl der Durchgänge über den Messpfad bereitzustellen, um eine superheterodyne Modulationsphase, die im Wesentlichen unempfindlich gegenüber Bewegungen entlang des Messpfads ist, bereitzustellen.

Der vorliegenden Erfindung liegt die Aufgabe zugrunde, die im Stand der Technik aufgezeigten Nachteile zu überwinden und ein Verfahren sowie eine Vorrichtung zur aktiven Stabilisierung der Gasbrechzahl, respektive der Gasdichte in einer gasdicht abgeschlossenen Messkammer bereitzustellen, mit denen die Brechzahl bzw. Brechzahländerungen, respektive Dichte bzw. Dichteänderungen, des Gases nicht rechnerisch korrigiert bzw. unter Vakuumbedingungen gemessen werden, sondern die Brechzahl respektive Dichte selbst im gesamten Messvolumen und vorzugsweise nahe des Umgebungsluftdruckes stabilisiert und konstant gehalten werden können.

Erfindungsgemäß gelingt die Lösung dieser Aufgabe mit den Merkmalen des ersten und fünften Patentanspruchs. Vorteilhafte Ausgestaltungen der erfindungsgemäßen Lösung sind in den Unteransprüchen angegeben. Die Erfindung ist im beigefügten Anspruchssatz beschrieben.

Es wird ein Verfahren zur aktiven Stabilisierung der Gasbrechzahl, respektive der Gasdichte, in einer gasdicht abgeschlossenen Messkammer vorgeschlagen, wobei in der Messkammer eine brechzahl-, respektive dichtesensitive Messanordnung positioniert ist. Die Gasbrechzahl, respektive die Gasdichte, wird in der Messkammer mit Hilfe einer Messeinheit kontinuierlich erfasst und über eine Steuereinheit mit Hilfe einer Stelleinheit auf einen konstanten Wert geregelt.

Mit der vorliegenden Erfindung kann die räumliche und zeitliche Brechzahl- respektive Dichtestabilität einer optischen, respektive gravimetrischen Messanordnung und damit die Messunsicherheit der optischen, respektive gravimetrischen Messung mit relativ wenig Aufwand deutlich verbessert werden. Im Vergleich zu Messungen in Vakuumbedingungen ist von deutlich weniger technischem Aufwand für die Realisierung der Messkammer auszugehen. Für Verfahren, die auf dem Prinzip einer Fokusabstandsdetektion basieren, ist es der einzige Weg, auch Langzeitmessungen mit geringer Messunsicherheit zu realisieren. Durch den Betrieb vorzugsweise nahe des Umgebungsluftdruckes kann die Messkammer gegenüber dem Stand der Technik dünnwandiger ausgelegt werden und damit einfacher, materialsparender und kostengünstiger realisiert werden.

Die Messanordnung dient beispielsweise der Präzisionswägung oder Präzisionslängenmessung und ist brechzahl- und dichtesensitiv. Sie soll sich in einer Umgebung befinden, in der die Gasbrechzahl und damit die Gasdichte stabilisiert, also konstant, sind. Die Messeinheit bestimmt Gasbrechzahl und/oder Gasdichte indirekt oder misst sie direkt.

Ferner wird eine Vorrichtung zur aktiven Stabilisierung der Gasbrechzahl, respektive der Gasdichte, in einer gasdicht abgeschlossenen Messkammer vorgeschlagen, in der eine brechzahl-, respektive dichtesensitive Messanordnung positioniert ist, die zur Durchführung des oben genannten Verfahrens geeignet und/oder konfiguriert ist. Die Messeinheit oder eine Messeinheit ist im Inneren der Messkammer angeordnet, eine Stelleinheit oder die Stelleinheit ist gasdicht mit der Messkammer verbunden und eine Steuereinheit oder die Steuereinheit ist mit der Messeinheit und der Stelleinheit elektrisch gekoppelt.

Die erfindungsgemäße Vorrichtung umfasst zunächst in herkömmlicher Weise eine Messkammer, welche insofern relativ luftdicht ist, um in ihrem Innern einen konstanten Luftdruck aufbauen und regeln zu können. Vorzugsweise wird ein leichter Unterdruck in der Messkammer erzeugt, der ein sicheres Abschließen etwaiger Dichtungen an verschließbaren Öffnungen der Kammer ermöglicht. Im Innern der Kammer befindet sich das komplette optische Messinstrument, auch als die komplette optische Messanordnung bezeichnet, (beispielsweise Laserinterferometer, Messkomparator, Messmikroskop), respektive das gravimetrische Messinstrument, auch als die gravimetrische Messanordnung bezeichnet, die nicht weiter beschrieben werden muss, als dass sie eine brechzahl-, respektive dichteabhängige Messgröße ermitteln soll. Die Messkammer ist mittels einer Einrichtung ausgestattet, die eine Luftdruckänderung im Innern erzeugen kann. Im Innern der Kammer wird die Brechzahl, respektive Dichte, der Luft kontinuierlich gemessen bzw. ermittelt. Bei Abweichung von einem vorher definierten Arbeitspunkt der Brechzahl, respektive Dichte, wird durch Druckerhöhung bzw. -erniedrigung, respektive Volumenerhöhung bzw. -erniedrigung, der ursprüngliche Wert wiederhergestellt und somit auf einen konstanten Wert geregelt, also stabilisiert.

Ein Vorteil dieser erfindungsgemäßen Vorrichtung besteht darin, dass der Außenluftdruck auf die Brechzahl, respektive Dichte, im Innern der Kammer keinen Einfluss mehr hat. Ein weiterer Vorteil besteht darin, dass langsame Brechzahl-, respektive Dichteänderungen durch unvermeidliche Temperaturschwankungen durch sehr schnelle Druck- und/oder Volumenänderungen ausgeglichen werden können. Ein zusätzlicher Vorteil der erfindungsgemäßen Lösung besteht darin, dass Unsicherheiten in der Bestimmung der Totstrecken bzw. optischen Bezugsstrecken sowie die Unsicherheit der empirischen Brechzahlformeln sich nicht mehr auf das Messergebnis auswirken können.

Eine bevorzugte Ausführungsform der erfindungsgemäßen Lösung besteht darin, den Luftdruck in der Messkammer über Druckschläuche mit Hilfe einer Druckerzeugungsanlage zu ändern. Dabei umfasst die Druckerzeugungsanlage einen Kompressor und eine Vakuumpumpe, einen Unterdruck- und einen Überdruckbehälter und entsprechende Ventile, über welche wohldosierte, verfahrensgemäße Druckänderungen in der Kammer erzeugt werden können.

Eine weitere Ausbildungsform erzeugt die erforderlichen Druckänderungen in der Messkammer mit Hilfe eines an der Kammer angebrachten Metallbalges, dessen Länge und damit dessen Volumen über eine elektromechanische Verschiebevorrichtung hochgenau und dynamisch verändert werden kann. Entsprechend der allgemeinen Gasgleichung wird somit ebenfalls eine Luftdruckänderung, respektive Brechzahländerung, respektive Dichteänderung erreicht.

Die Druckstelleinheit kann zumindest einen über Ventile mit der Druckkammer oder Messkammer verbundenen Über- oder Unterdruckbehälter umfassen. Die

Volumenstelleinheit kann als Faltenbalg, Pneumatikzylinder, kolbenloser Pneumatikzylinder oder Balgzylinder ausgebildet sein.

Die Brechzahl im Innern der Kammer kann nach einer weiteren bevorzugten Ausführung auch mittels Umweltsensoren für Luftdruck, Lufttemperatur und Luftfeuchte unter Anwendung der bekannten Edlén-Formel (s. [3] oder [4]) oder anderen empirischen Brechzahlformeln bestimmt werden.

Eine weitergebildete Ausführungsform zeichnet sich dadurch aus, dass die Brechzahl direkt mit einem Refraktometer im Innern der Kammer gemessen wird und als Regelgröße fungiert.

Die Dichte im Innern der Kammer kann vorzugsweise mittels Umweltsensoren für Luftdruck, Lufttemperatur und Luftfeuchte unter Anwendung der bekannten CIPM Formel [7] oder der idealen Gasgleichung unter Berücksichtigung einer luftfeuchteangepassten Gaskonstante bestimmt werden.

Zur Erzielung einer sehr hochwertigen Brechzahl-, respektive Dichtekonstanz können sowohl die Druckregelung als auch die Volumenregelung in der Messkammer gleichzeitig realisiert werden, wobei mit der Druckregelung eine Einstellung über einen größeren Bereich und mit der Volumenregelung eine sehr feinfühlige Regelung ermöglicht wird.

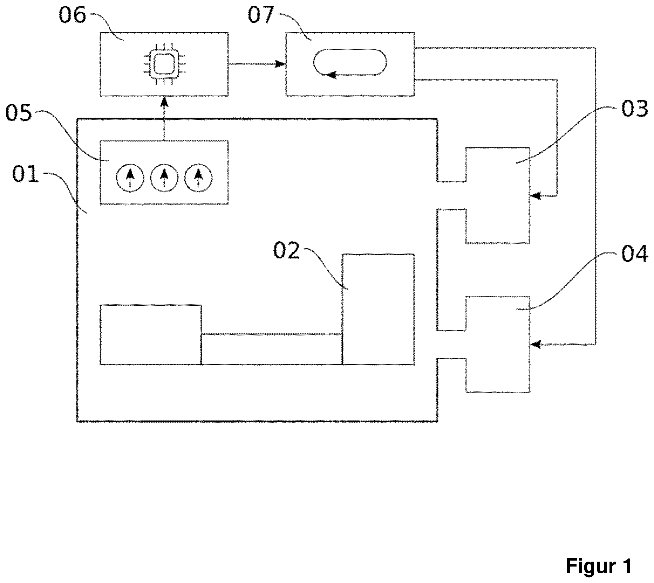

Die Erfindung wird im Folgenden unter Bezugnahme auf die Figur 1 näher erläutert.

In einer druckdichten Messkammer (01) ist eine brechzahl-, respektive dichtesensitive Messanordnung (02) positioniert. Die Messkammer (01) ist mit einer Druckstelleinheit (03) und/oder einer Volumenstelleinheit (04) ausgestattet.

In der Messkammer (01) ist eine Messeinheit (05) zur indirekten Bestimmung der Gasbrechzahl, respektive Gasdichte innerhalb der Messkammer (01) durch Messung von Gasparametern, wie Gastemperatur, Gasdruck, Wasserdampfpartialdruck (auch als Gasfeuchte bezeichnet) und Gaszusammensetzung angeordnet. In einer Datenverarbeitungseinheit (06) werden die gewonnenen Messwerte verarbeitet und die aktuelle Brechzahl des Gases, respektive die aktuelle Dichte des Gases in der Messkammer (01) ermittelt.

In der Regeleinheit (07) werden Abweichungen vom Sollwert der Gasbrechzahl, respektive Gasdichte identifiziert und Ansteuersignale für die Druckstelleinheit (03) und die Volumenstelleinheit (04) generiert.

### Bezugszeichenliste

- 01 -: Messkammer
- 02 -: brechzahl-, respektive dichtesensitive Messanordnung
- 03 -: Druckstelleinheit
- 04 -: Volumenstelleinheit
- 05 -: Messeinheit
- 06 -: Datenverarbeitungseinheit
- 07 -: Regeleinheit

## Patentansprüche

1. Verfahren zur aktiven Stabilisierung der Gasbrechzahl, respektive der Gasdichte, in einer gasdicht abgeschlossenen Messkammer (01), wobei in der Messkammer (01) eine brechzahl-, respektive dichtesensitive Messanordnung (02) positioniert ist, wobei die Gasbrechzahl, respektive die Gasdichte, in der Messkammer (01) mit Hilfe einer Messeinheit (05) zur indirekten Bestimmung der Gasbrechzahl, respektive Gasdichte innerhalb der Messkammer (01) durch Messung von Gasparametern kontinuierlich erfasst und über eine Steuereinheit (06, 07) mit Hilfe einer Stelleinheit (03, 04) auf einen konstanten Wert geregelt wird, wobei die Messeinheit (05) Sensoren zur Erfassung der Gastemperatur, des Gasdruckes und der Gasfeuchte im Inneren der Messkammer (01) umfasst, wobei die Gasbrechzahl mit Hilfe der Edlén-Formel, respektive die Gasdichte mit Hilfe der idealen Gasgleichung unter Berücksichtigung einer luftfeuchteangepassten Gaskonstante ermittelt wird, wobei die Messeinheit (05) zusätzlich einen Sensor umfasst, mit dem die Gaszusammensetzung im Inneren der Messkammer (01) erfasst wird.

2. Verfahren nach Anspruch 1, **dadurch gekennzeichnet, dass** mit Hilfe der Stelleinheit (03, 04) in der Messkammer (01) ein Über- oder Unterdruck und/oder eine Volumenänderung erzeugt wird.

3. Verfahren nach Anspruch 1 oder 2, **dadurch gekennzeichnet, dass** die Gasbrechzahl, respektive die Gasdichte, in der Messkammer (01) direkt relativ oder absolut gemessen oder mit Hilfe erfasster Gasparameter mathematisch ermittelt wird.

4. Verfahren nach einem der vorhergehenden Ansprüche, **dadurch gekennzeichnet, dass** die Gasbrechzahl, respektive die Gasdichte, in der gesamten Messkammer (01) nahe des Umgebungsdruckes stabilisiert wird.

5. Vorrichtung zur aktiven Stabilisierung der Gasbrechzahl, respektive der Gasdichte, in einer gasdicht abgeschlossenen Messkammer (01), wobei in der Messkammer (01) eine brechzahl-, respektive dichtesensitive Messanordnung (02) positioniert ist, wobei die Vorrichtung zur Durchführung eines Verfahrens nach einem der Ansprüche 1 bis 4 konfiguriert ist, indem eine Messeinheit (05) im Inneren der Messkammer (01) angeordnet, eine Stelleinheit (03, 04) gasdicht mit der Messkammer (01) verbunden und eine Steuereinheit (06, 07) mit der Messeinheit (05) und der Stelleinheit (03, 04) elektrisch gekoppelt ist, wobei die Messeinheit (05) Sensoren zur Erfassung der Gastemperatur, des Gasdruckes und der Gasfeuchte im Inneren der Messkammer (01) umfasst, und wobei die Messeinheit dazu ausgebildet ist, die Gasbrechzahl mit Hilfe der Edlén-Formel, respektive die Gasdichte mit Hilfe der idealen Gasgleichung unter Berücksichtigung einer luftfeuchteangepassten Gaskonstante zu ermitteln, und wobei die Messeinheit (05) zusätzlich einen Sensor zur Erfassung der Gaszusammensetzung im Inneren der Messkammer (01) umfasst.

6. Vorrichtung nach Anspruch 5, **dadurch gekennzeichnet, dass** die Stelleinheit (03, 04) eine Druckstelleinheit (03) und/oder eine Volumenstelleinheit (04) aufweist und dafür ausgebildet ist, in der Messkammer (01) einen Über- oder Unterdruck und/oder eine Volumenänderung zu erzeugen.

7. Vorrichtung nach Anspruch 6, **dadurch gekennzeichnet, dass** die Druckstelleinheit (03) zumindest einen über Ventile mit der Messkammer (01) verbundenen Über- und Unterdruckbehälter umfasst und die Volumenstelleinheit (04) als Faltenbalg, Pneumatikzylinder, kolbenloser Pneumatikzylinder oder Balgzylinder ausgebildet ist.

8. Vorrichtung nach einem der vorhergehenden Ansprüche, **dadurch gekennzeichnet, dass** die Steuereinheit (06, 07) eine Datenverarbeitungseinheit (06) und eine Regeleinheit (07) aufweist.

## Claims

1. Method for active stabilization of the gas refractive index, respectively gas density, in a hermetically sealed measuring chamber (01), wherein a refractive index-sensitive, respectively density-sensitive, measuring arrangement (02) is positioned in the measuring chamber (01), wherein the gas refractive index, respectively the gas density, in the measuring chamber (01) is acquired continuously with the aid of a measuring unit (05) for indirectly determining the gas refractive index, respectively gas density, within the measuring chamber (01) by measuring gas parameters and regulated to a constant value via a control unit (06, 07) with the aid of an adjustment unit (03, 04), wherein the measuring unit (05) comprises sensors for acquiring the gas temperature, gas pressure and gas humidity inside the measuring chamber (01), wherein the gas refractive index is ascertained with the aid of the Edlén formula, respectively the gas density is ascertained with the aid of the ideal gas equation taking into account an air humidity-adjusted gas constant, wherein the measuring unit (05) additionally comprises a sensor that is used to acquire the gas composition inside the measuring chamber (01).

2. Method according to Claim 1, **characterized in that** an overpressure or underpressure and/or a volume change is generated in the measuring chamber (01) with the aid of the adjustment unit (03, 04).

3. Method according to Claim 1 or 2, **characterized in that** the gas refractive index, respectively the gas density, in the measuring chamber (01) is measured directly in relative or absolute terms or ascertained mathematically with the aid of acquired gas parameters.

4. Method according to one of the preceding claims, **characterized in that** the gas refractive index, respectively the gas density, in the overall measuring chamber (01) is stabilized close to ambient pressure.

5. Device for active stabilization of the gas refractive index, respectively gas density, in a hermetically sealed measuring chamber (01), wherein a refractive index-sensitive, respectively density-sensitive, measuring arrangement (02) is positioned in the measuring chamber (01), wherein the device is configured to carry out a method according to one of Claims 1 to 4 by virtue of a measuring unit (05) being arranged inside the measuring chamber (01), an adjustment unit (03, 04) being hermetically connected to the measuring chamber (01) and a control unit (06, 07) being electrically coupled to the measuring unit (05) and the adjustment unit (03, 04), wherein the measuring unit (05) comprises sensors for acquiring the gas temperature, gas pressure and gas humidity inside the measuring chamber (01), and wherein the measuring unit is designed to ascertain the gas refractive index with the aid of the Edlén formula, respectively to ascertain the gas density with the aid of the ideal gas equation taking into account an air humidity-adjusted gas constant, and wherein the measuring unit (05) additionally comprises a sensor for acquiring the gas composition inside the measuring chamber (01).

6. Device according to Claim 5, **characterized in that** the adjustment unit (03, 04) has a pressure adjustment unit (03) and/or a volume adjustment unit (04) and is designed to generate an overpressure or underpressure and/or a volume change in the measuring chamber (01).

7. Device according to Claim 6, **characterized in that** the pressure adjustment unit (03) comprises at least one overpressure and underpressure container that is connected to the measuring chamber (01) via valves and the volume adjustment unit (04) is in the form of a bellows, pneumatic cylinder, pistonless pneumatic cylinder or bellows cylinder.

8. Device according to one of the preceding claims, **characterized in that** the control unit (06, 07) has a data processing unit (06) and a regulating unit (07).

## Revendications

1. Procédé de stabilisation active de l'indice de réfraction du gaz, ou de la densité du gaz dans une chambre de mesure (01) fermée de manière étanche aux gaz, un agencement de mesure (02) sensible à l'indice de réfraction, ou sensible à la densité, étant positionné dans la chambre de mesure (01), l'indice de réfraction du gaz, ou la densité du gaz, dans la chambre de mesure (01) étant mesuré en continu à l'aide d'une unité de mesure (05) pour la détermination indirecte de l'indice de réfraction du gaz, ou de la densité du gaz, à l'intérieur de la chambre de mesure (01) par mesure de paramètres du gaz, et étant régulé à une valeur constante au moyen d'une unité de commande (06, 07) à l'aide d'une unité d'actionnement (03, 04), l'unité de mesure (05) comprenant des capteurs pour la détection de la température du gaz, de la pression du gaz et de l'humidité du gaz à l'intérieur de la chambre de mesure (01), l'indice de réfraction du gaz étant déterminé à l'aide de la formule d'Edlén, ou la densité du gaz étant déterminée à l'aide de l'équation des gaz parfaits en tenant compte d'une constante des gaz ajustée à l'humidité de l'air, et l'unité de mesure (05) comprenant en outre un capteur permettant de détecter la composition du gaz à l'intérieur de la chambre de mesure (01).

2. Procédé selon la revendication 1, **caractérisé en ce qu'**une surpression ou une dépression et/ou une modification de volume est générée dans la chambre de mesure (01) à l'aide de l'unité d'actionnement (03, 04).

3. Procédé selon la revendication 1 ou 2, **caractérisé en ce que** l'indice de réfraction du gaz, ou la densité du gaz, dans la chambre de mesure (01) est mesuré directement de manière relative ou absolue ou est déterminé mathématiquement à l'aide de paramètres du gaz détectés.

4. Procédé selon l'une quelconque des revendications précédentes, **caractérisé en ce que** l'indice de réfraction du gaz, ou la densité du gaz, est stabilisé dans l'ensemble de la chambre de mesure (01) à une valeur proche de la pression ambiante.

5. Dispositif de stabilisation active de l'indice de réfraction du gaz, ou de la densité du gaz dans une chambre de mesure (01) fermée de manière étanche aux gaz, un agencement de mesure (02) sensible à l'indice de réfraction, ou sensible à la densité, étant positionné dans la chambre de mesure (01), le dispositif étant configuré pour mettre en œuvre un procédé selon l'une quelconque des revendications 1 à 4, en ce qu'une unité de mesure (05) est disposée à l'intérieur de la chambre de mesure (01), une unité d'actionnement (03, 04) est reliée de manière étanche aux gaz à la chambre de mesure (01) et une unité de commande (06, 07) est couplée électriquement à l'unité de mesure (05) et à l'unité d'actionnement (03, 04), l'unité de mesure (05) comprenant des capteurs pour la détection de la température du gaz, de la pression du gaz et de l'humidité du gaz à l'intérieur de la chambre de mesure (01), et l'unité de mesure étant conçue pour déterminer l'indice de réfraction du gaz à l'aide de la formule d'Edlén, ou la densité du gaz à l'aide de l'équation des gaz parfaits en tenant compte d'une constante des gaz ajustée à l'humidité de l'air, et l'unité de mesure (05) comprenant en outre un capteur pour la détection de la composition du gaz à l'intérieur de la chambre de mesure (01).

6. Dispositif selon la revendication 5, **caractérisé en ce que** l'unité d'actionnement (03, 04) comprend une unité d'actionnement de pression (03) et/ou une unité d'actionnement de volume (04) et est conçue pour générer une surpression ou une dépression et/ou une modification de volume dans la chambre de mesure (01).

7. Dispositif selon la revendication 6, **caractérisé en ce que** l'unité d'actionnement de pression (03) comprend au moins un réservoir de surpression et de dépression relié à la chambre de mesure (01) par des vannes et l'unité d'actionnement de volume (04) est réalisée sous forme de soufflet, de vérin pneumatique, de vérin pneumatique sans piston ou de vérin à membrane.

8. Dispositif selon l'une quelconque des revendications précédentes, **caractérisé en ce que** l'unité de commande (06, 07) comprend une unité de traitement des données (06) et une unité de régulation (07).
